# EUROPEAN PATENT APPLICATION

(11) **EP 4 692 381 A1**
(43) Date of publication of application: **11.02.2026**
(21) Application number: 24780502.1
(22) Date of filing: 27.03.2024
(51) Int. Cl.: C21D 9/00, B60G 21/055, C21D 1/40, C21D 7/06

(54) **STABILIZER MANUFACTURING METHOD**

(30) Priority: 31.03.2023 JP 2023058746
(71) Applicant: NHK Spring Co., Ltd., Yokohama-shi, Kanagawa 236-0004 (JP)
(72) Inventor: KAYAMA, Kenji, Yokohama-shi, Kanagawa 236-0004 (JP); KATAKURA, Takahiro, Yokohama-shi, Kanagawa 236-0004 (JP); MORI, Shogo, Yokohama-shi, Kanagawa 236-0004 (JP); AOKI, Shunsuke, Yokohama-shi, Kanagawa 236-0004 (JP)
(74) Representative: Hoffmann Eitle
(86) International application number: PCT/JP2024/012342
(87) International publication number: WO 2024/204400

(57) **Abstract**

A method for manufacturing a stabilizer according to the present invention is a method for manufacturing a stabilizer using a columnar member and includes a bending step of bending the columnar member to form the columnar member into a shape of the stabilizer, a quenching step of quenching the columnar member after the bending step, and a tempering step of tempering the columnar member after the quenching. At least one of the quenching step and the tempering step includes a step of changing a relative positional relationship between both end portions of the columnar member at a time of heating.

## Description

### Field

The present invention relates to a method for manufacturing a stabilizer.

### Background

A stabilizer used in a vehicle or the like is attached to the vehicle to stabilize the posture of the vehicle. As the stabilizer, a stabilizer obtained by deforming a columnar member is known. Here, in a case where the stabilizer is manufactured using the columnar member, it is necessary to increase the strength of the stabilizer. As a technique for increasing the strength of the stabilizer, a technique for quenching or tempering by connecting electrodes to the end portions and performing electrical heating is known (see, for example, Patent Literature 1).

### Citation List

### Patent Literature

Patent Literature 1: JP 2014-173115 A

### Summary

### Technical Problem

However, in the electrical heating, there is a possibility that a difference in thermal expansion due to a temperature difference between the inside and the outside of the bent portion of the columnar member and a temperature difference between the straight portion and the bent portion of the columnar member occurs, and that the columnar member is deformed into a shape different from the design shape due to the difference in thermal expansion.

The present invention has been made in view of the above, and an object thereof is to provide a method for manufacturing a stabilizer capable of controlling deformation at the time of a heat treatment.

### Solution to Problem

To solve the above-described problem and achieve the object, a method for manufacturing a stabilizer using a columnar member according to the present invention includes: a bending step of bending the columnar member to form the columnar member into a shape of the stabilizer; a quenching step of quenching the columnar member after the bending step; and a tempering step of tempering the columnar member after the quenching, wherein at least one of the quenching step and the tempering step includes a step of changing a relative positional relationship between both of end portions of the columnar member at a time of heating.

Moreover, in the above-described method for manufacturing a stabilizer according to the present invention, the step of changing the relative positional relationship between both of the end portions of the columnar member at the time of the heating is completed between a time when the columnar member is gripped before the heating is started and a time when the gripping of the columnar member is released after the heating is ended.

Moreover, in the above-described method for manufacturing a stabilizer according to the present invention, in the step of changing the relative positional relationship between both of the end portions of the columnar member at the time of the heating, both of the end portions of the columnar member are deformed in directions of being away from each other.

Moreover, in the above-described method for manufacturing a stabilizer according to the present invention, before changing the relative positional relationship between both the end portions of the columnar member at the time of the heating, the end portion of the columnar member gripped is rotated around a central axis of the end portion of the columnar member.

### Advantageous Effects of Invention

The present invention brings about an effect of being capable of controlling deformation at the time of a heat treatment in manufacturing a stabilizer.

### Brief Description of Drawings

[FIG. 1] FIG. 1 is a perspective view illustrating an example of a suspension mechanism including a stabilizer according to an embodiment of the present invention.
[FIG. 2] FIG. 2 is a plan view illustrating a configuration of the stabilizer illustrated in FIG. 1.
[FIG. 3] FIG. 3 is a perspective view illustrating a configuration of a tubular member for manufacturing the stabilizer according to the embodiment of the present invention.
[FIG. 4] FIG. 4 is a flowchart for explaining a method for manufacturing a stabilizer according to an embodiment of the present invention.
[FIG. 5] FIG. 5 is a diagram for explaining the shape of the tubular member after bending.
[FIG. 6] FIG. 6 is a diagram illustrating a configuration of a heating device used at the time of heating.
[FIG. 7] FIG. 7 is a diagram for explaining an operation of the heating device illustrated in FIG. 6.
[FIG. 8] FIG. 8 is a diagram for explaining the shape of the tubular member at the time of heating.
[FIG. 9] FIG. 9 is a diagram illustrating an example of an analysis result of an equivalent plastic strain in a case where heating is performed using the heating device illustrated in FIG. 6.
[FIG. 10] FIG. 10 is a diagram illustrating an analysis result of an equivalent plastic strain in a case where heating is performed by a conventional heating method.
[FIG. 11] FIG. 11 is a diagram for explaining a distance (span) between the end portions of the stabilizer depending on whether or not the end portion position is changed at the time of quenching and tempering.
[FIG. 12] FIG. 12 is a diagram for explaining a change in the end portion position at the time of heating. Description of Embodiments

Hereinbelow, a mode for carrying out the present invention (hereinbelow, referred to as an "embodiment") will be described with reference to the accompanying drawings. Note that the drawings are schematic, and the relationship between the thickness and the width of each portion, the ratio between the thicknesses of respective portions, and the like may be different from actual ones, and the dimensional relationship and the ratio between some portions in different drawings may be different from actual ones.

### (Embodiment)

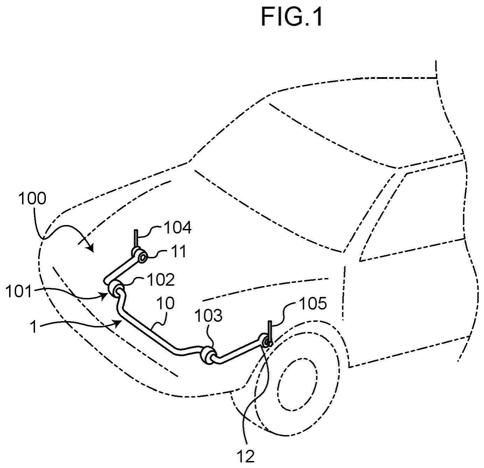

FIG. 1 is a perspective view illustrating an example of a suspension mechanism including a stabilizer according to an embodiment of the present invention. A stabilizer device 100 illustrated in FIG. 1 includes a stabilizer 1 and a support portion 101 that supports the stabilizer 1 on a vehicle body. As an example, the support portion 101 includes a pair of rubber bushes 102 and 103. Both the end portions of the stabilizer 1 are connected to the suspension mechanism via connection members 104 and 105.

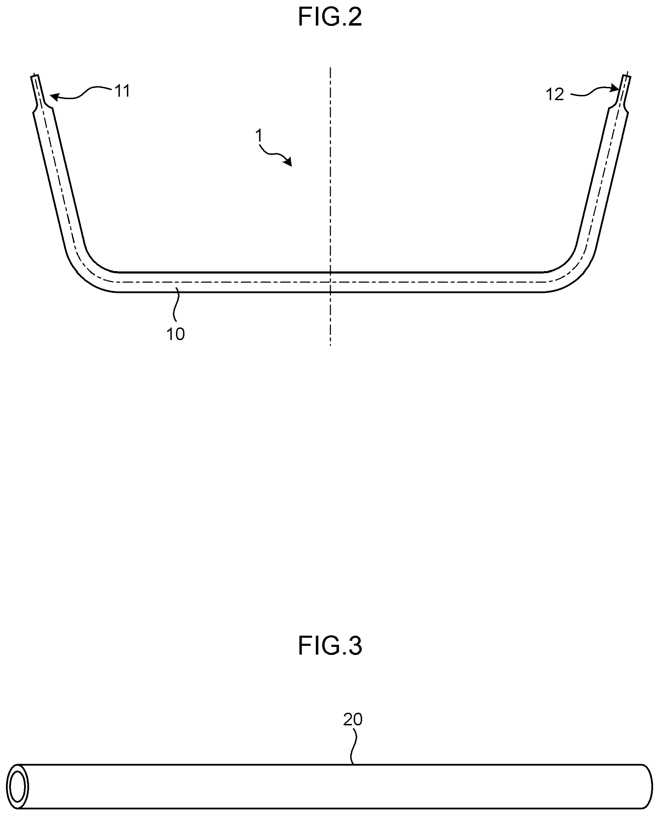

FIG. 2 is a plan view illustrating a configuration of the stabilizer illustrated in FIG. 1. For the stabilizer 1, a hollow cylindrical member (tubular member) made of metal or various fibers (for example, carbon fibers) is used. The stabilizer 1 includes a main body portion 10, a first end portion 11 continuous with one end of the main body portion 10, and a second end portion 12 continuous with the other end of the main body portion 10.

Note that, in the present embodiment, an example of manufacturing the stabilizer 1 using a hollow cylindrical tubular member will be described. However, a solid cylindrical bar-shaped member may be used. That is, the stabilizer 1 is formed using a hollow or solid columnar member.

The central portion of the main body portion 10 extends linearly, and both the end portions of the main body portion 10 are bent.

Each of the first end portion 11 and the second end portion 12 has a shape formed by crushing the tubular member. A through hole through which a fastening member is inserted is formed in each of the first end portion 11 and the second end portion 12 (not illustrated).

Note that, in the present embodiment, an example in which the main body portion 10 has a linear shape will be described, but the shape of the main body portion 10 can be designed into a freely-selected shape such as a partially curved shape.

Next, a method for manufacturing the above-described stabilizer 1 will be described with reference to FIGS. 3 to 5. The stabilizer 1 is manufactured by processing a base material illustrated in FIG. 3.

FIG. 3 is a perspective view illustrating a configuration of a tubular member for manufacturing the stabilizer according to the embodiment of the present invention. A tubular member 20 serving as a base material of the stabilizer 1 has a tubular shape extending with a uniform inner diameter and outer diameter. The thickness of the tubular member 20 is, for example, the same as the thickness of the main body portion 10 of the stabilizer 1.

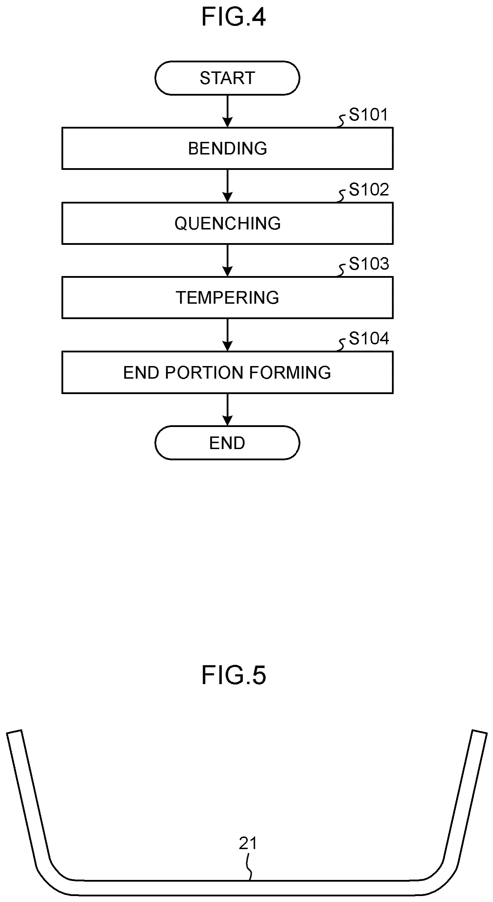

FIG. 4 is a flowchart for explaining a method for manufacturing a stabilizer according to an embodiment of the present invention. First, the tubular member 20 is bent to form the stabilizer 1 (Step S101: bending step). Note that, if necessary, a treatment of cutting the tubular member 20 to have a predetermined length is performed before performing the bending. Hereinbelow, the tubular member subjected to the bending is referred to as a tubular member 21.

FIG. 5 is a diagram for explaining the shape of the tubular member after the bending. The tubular member 21 after the bending has a shape in which both the end portions are bent.

Thereafter, the tubular member 21 after the bending is quenched (Step S102: quenching step). In the quenching, the tubular member 21 is heated to a temperature equal to or higher than a transformation point of the material constituting the tubular member 21 and quenched. The temperature after heating may be maintained for a predetermined time before quenching.

After the quenching, the tubular member 21 is tempered (Step S103: tempering step). In the tempering, the tubular member 21 after the quenching is heated at a lower temperature than that at the time of the quenching and cooled. Note that the temperature after heating may be maintained for a predetermined time before cooling.

After the tempering, the end portions of the tubular member 21 are crushed to form the ends (the first end portion 11 and the second end portion 12), thereby preparing the stabilizer 1 (Step S104: end portion forming step).

Note that, after the end portion forming, the outer surface may be subjected to a shot peening treatment. In addition, it is not essential to perform the end portion forming step after the tempering step, and the end portion forming may be performed in advance before entering the process of the present invention.

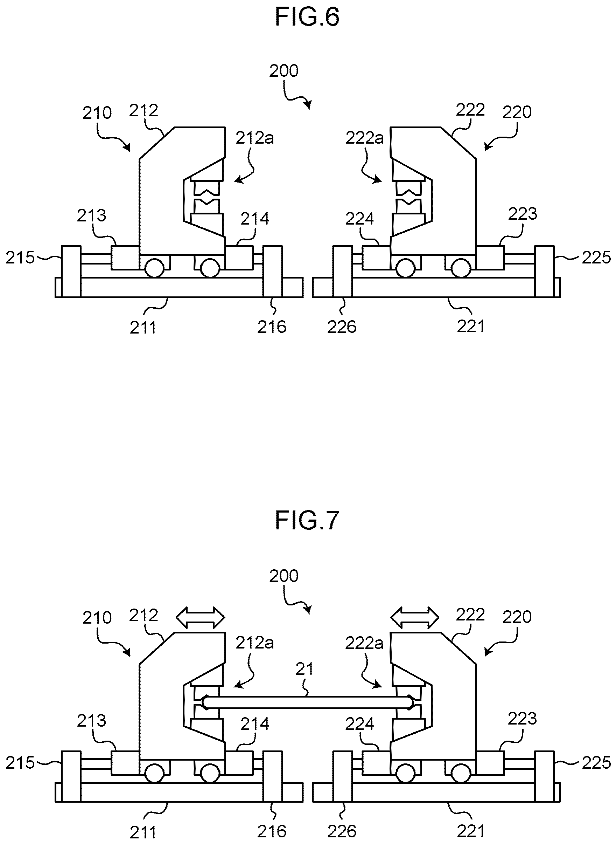

Subsequently, treatment at the time of the quenching will be described with reference to FIGS. 6 to 11. FIG. 6 is a diagram illustrating a configuration of a heating device used at the time of heating. The present embodiment will be described assuming that a heating device 200 illustrated in FIG. 6 is used at the time of quenching the tubular member 21.

The heating device 200 includes a first drive unit 210 and a second drive unit 220. The heating device 200 is driven under the control of a not-illustrated control device.

The first drive unit 210 includes a rail 211, a moving unit 212, a first air cylinder 213, a second air cylinder 214, a first stopper 215, and a second stopper 216.

The rail 211 extends along a direction in which the end portion position of the tubular member 21 is changed.

The moving unit 212 is provided to be movable on the rail 211. The moving unit 212 includes a grip unit 212a that grips the tubular member 21. The grip unit 212a grips one end portion of the tubular member 21 by means of a pressurizing mechanism or the like. The grip unit 212a is made of a conductive material and is connected to a not-illustrated power feeding device.

The first air cylinder 213 and the second air cylinder 214 expand and contract along the rail 211 by means of pneumatic pressure.

The first air cylinder 213 is provided between the moving unit 212 and the first stopper 215.

The second air cylinder 214 is provided between the moving unit 212 and the second stopper 216.

The first stopper 215 regulates the moving range of the moving unit 212 by means of the first air cylinder 213.

The second stopper 216 regulates the moving range of the moving unit 212 by means of the second air cylinder 214.

Here, the first stopper 215 regulates the movement of the moving unit 212 in one of the moving directions, and the second stopper 216 regulates the movement of the moving unit 212 in the other of the moving directions.

The second drive unit 220 includes a rail 221, a moving unit 222, a first air cylinder 223, a second air cylinder 224, a first stopper 225, and a second stopper 226.

The rail 221 extends in the same direction as the extending direction of the rail 211 and along a direction in which the end portion position of the tubular member 21 is changed. That is, the rail 221 extends on the same axis as the rail 211. Note that the extending direction of the rail 221 can appropriately be set according to the shape of the tubular member 21 and the deformation mode of the end portion.

The moving unit 222 is provided to be movable on the rail 221. The moving unit 222 includes a grip unit 222a that grips the tubular member 21. The grip unit 222a grips one end portion of the tubular member 21 by means of a pressurizing mechanism or the like. The grip unit 222a is made of a conductive material and is connected to a not-illustrated power feeding device.

The first air cylinder 223 and the second air cylinder 224 expand and contract along the rail 221 by means of pneumatic pressure.

The first air cylinder 223 is provided between the moving unit 222 and the first stopper 225.

The second air cylinder 224 is provided between the moving unit 222 and the second stopper 226.

Note that each of the air cylinders may be a hydraulic cylinder or an electric cylinder.

The first stopper 225 regulates the moving range of the moving unit 222 by means of the first air cylinder 223.

The second stopper 226 regulates the moving range of the moving unit 222 by means of the second air cylinder 224.

Here, the first stopper 225 regulates the movement of the moving unit 222 in one of the moving directions, and the second stopper 226 regulates the movement of the moving unit 222 in the other of the moving directions.

At the time of the quenching, in the heating device 200, electricity is supplied to the tubular member 21 via the grip units 212a and 222a, and the moving units 212 and 222 are moved to change the end portion positions of the tubular member 21. At this time, the moving directions and the moving amounts of the moving units 212 and 222 are set on the basis of the characteristics, such as the thermal expansion coefficient, of the tubular member 21, the size of the tubular member 20, and the radius of curvature of the bent portion. The movement of the moving units 212 and 222 may be performed at the same or different time as or from the electricity supply. In addition, the movement of the moving units 212 and 222 is preferably completed at least during a period from the gripping of the tubular member 21 to the heating start time, a period from the heating start time to the heating end time, or a period from the heating end time to the release of the gripping of the tubular member 21. Alternatively, the movement of the moving units 212 and 222 may be completed by the time when the end portion reaches a predetermined temperature due to heat generated by the electricity supply, for example.

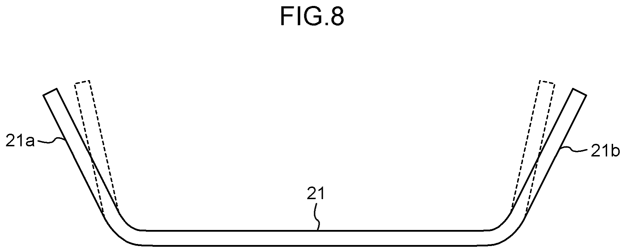

FIG. 8 is a diagram for explaining the shape of the tubular member at the time of heating. Due to the movement of the moving units 212 and 222, for example, the tubular member 21 is deformed in directions in which both the end portions thereof are away from each other, and both the end portions are expanded.

Note that, depending on the shape of the stabilizer to be manufactured, both the end portions may be moved so as to approach each other.

In this manner, in the present embodiment, the relative positional relationship between both the end portions of the tubular member 21 is changed from the positional relationship in a natural state in which a load other than gravity is not applied.

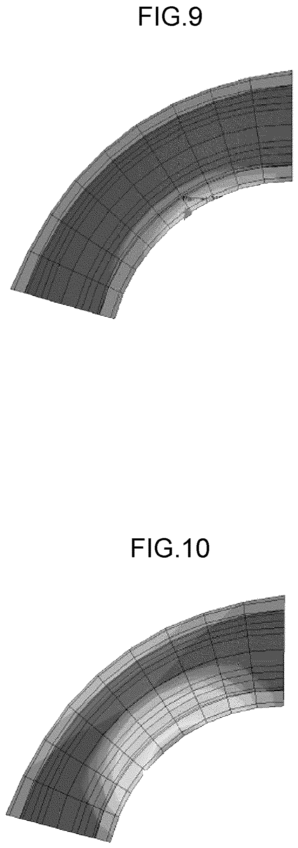

Here, an analysis result using a finite element method (FEM) will be described with reference to FIGS. 9 and 10. In the FEM analysis, an equivalent plastic strain at the bent portion of the tubular member 21 immediately after heating has been obtained as an analysis result. FIG. 9 is a diagram illustrating an example of an analysis result of the equivalent plastic strain in a case where heating is performed using the heating device illustrated in FIG. 6. FIG. 10 is a diagram illustrating an example of an analysis result of the equivalent plastic strain in a case where heating is performed by a conventional heating method. Note that, in the conventional heating method, the conditions such as the temperature are the same except that the control of changing the end portion of the tubular member 21 at the time of heating is not performed. The figures illustrate that the equivalent plastic strain is larger as the color is closer to red, and the equivalent plastic strain is smaller as the color is closer to blue.

The equivalent plastic strain is smaller when the end portion of the tubular member 21 is expanded at the time of the quenching than in the conventional heating method, in which the end portion of the tubular member 21 is not expanded at the time of the quenching (see FIGS. 9 and 10). In particular, the analysis result that the equivalent plastic strain on the inner peripheral side is smaller when the end portion of the tubular member 21 is expanded at the time of the quenching has been obtained. Due to the small equivalent plastic strain, deformation when the tubular member 21 is cooled after heating can be controlled.

In the present embodiment, when the stabilizer 1 is manufactured using the tubular member 20 as a base material, deformation corresponding to the plastic strain is reduced by changing the end portion position at the time of the quenching. According to the present embodiment, deformation at the time of the heat treatment can be controlled.

Here, in the heat treatment of the conventional art, in order to reduce deformation, heating is performed by binding the tubular member 21 at a plurality of locations. At this time, although the shape is corrected, deformation due to the plastic strain at the time of heating remains, and the shape may be unstable. On the other hand, in the present embodiment, by changing the end portion position at the time of heating, the equivalent plastic strain can be reduced as described above, and the shape can be stabilized at the time of heating.

Note that, in the embodiment, the example in which the treatment is performed using the heating device 200 at the time of the quenching has been described, but the end portion position may be changed using the heating device 200 at the time of the tempering. The treatment using the heating device 200 according to the present embodiment is effective in both the quenching and the tempering, and the above-described effect can be obtained by applying the treatment to at least one of the quenching and the tempering.

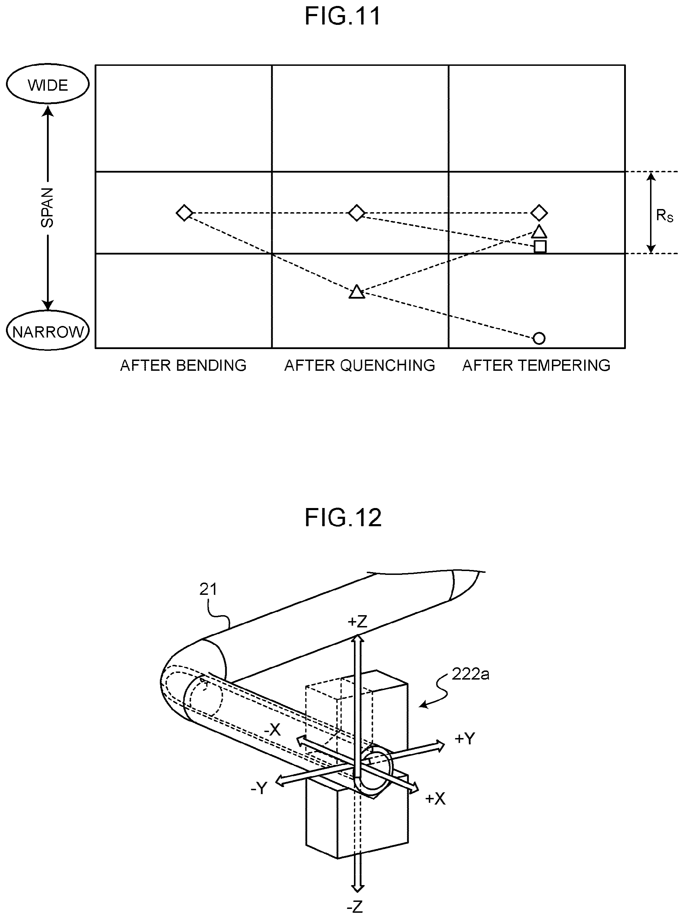

FIG. 11 is a diagram for explaining a distance (span) between the end portions of the stabilizer depending on whether or not the end portion position is changed at the time of the quenching and the tempering. In FIG. 11, the ◊ represents an example of a span change in a case where heating is performed by changing the end portion position at the time of the quenching and the tempering. The □ represents an example of a span change in a case where heating is performed by changing the end portion position only at the time of the quenching. The △ represents an example of a span change in a case where heating is performed by changing the end portion position only at the time of the tempering. The ∘ represents an example of a span change in a case where heating is performed by not changing the end portion position at the time of either the quenching or the tempering. In FIG. 11, in the □ example, the spans after the bending and after the quenching are the same as those in the ◊ example. A span range Rₛ indicates a standard range of the span.

As illustrated in FIG. 11, the change in the span after the tempering from the span after the bending is smaller in the case where heating is performed by changing the end portion position than in the case where heating is performed by not changing the end portion position. Furthermore, the change in the span after the tempering from the span before the heat treatment is smaller in the case where heating is performed by changing the end portion position at the time of the tempering.

Further, in the embodiment, an example in which the grip units 212a and 222a move in the same axial direction (one direction) has been described, but the grip units 212a and 222a may move in different directions. For example, in the example of the heating device 200 illustrated in FIG. 6, the rails 211 and 221 can be rotated to change the moving directions of the moving units 212 and 222. In addition, instead of the heating device 200 illustrated in FIG. 6, any configuration can be used in which the end portion of the tubular member 21 is gripped and moved in a three-dimensional space.

FIG. 12 is a diagram for explaining a change in the end portion position at the time of heating. In FIG. 12, at the end portion of the tubular member 21, a direction along the central axis in the extending direction is defined as an X direction, a direction orthogonal to the X direction and extending in the plate thickness direction is defined as a Y direction, and a direction orthogonal to the X direction and the Y direction is defined as a Z direction. Note that the Z direction is parallel to the direction of the load applied when the end portion is clamped by the grip unit 222a. In addition, a positive direction (+) and a negative direction (-) are set for each direction. In the above-described embodiment, for example, the end portion position is changed in the ±Y directions, but the end portion may be moved to a position on the XY plane or in a three-dimensional space determined by the X direction, the Y direction, and the Z direction.

Furthermore, in the embodiment, the grip units 212a and 222a of the heating device 200 may be configured to rotate around the central axis of the end portion of the tubular member 21 to be gripped. In the case of this configuration, for example, the grip units 212a and 222a each grip the end portion of the tubular member 21 and then rotate at a predetermined rotation angle. At this time, the rotation direction is set to a freely-selected direction. Thereafter, the electricity supply and the movement of the moving units 212 and 222 are executed. Note that the rotation is only required to be executed some time from the time before heating to the completion of heat removal. Further, the rotation axis is, for example, an axis parallel to the X direction, but an axis freely set in the tubular member 21 or the grip unit 222a may be used as the rotation axis.

Although the embodiment for carrying out the present invention has been described so far, the present invention should not be limited only by the above-described embodiment. For example, the present invention is applicable to a product that applies a residual stress to an inner peripheral surface of a tubular member.

In this manner, the present invention can include various embodiments and the like not described herein, and various design changes and the like can be made without departing from the technical idea specified by the claims.

### Industrial Applicability

As described above, the method for manufacturing a stabilizer according to the present invention is suitable for controlling deformation at the time of a heat treatment.

### Reference Signs List

1 STABILIZER
10 MAIN BODY PORTION
11 FIRST END PORTION
12 SECOND END PORTION
20 TUBULAR MEMBER
200 HEATING DEVICE
210 FIRST DRIVE UNIT
211, 221 RAIL
212, 222 MOVING UNIT
212a, 222a GRIP UNIT
213, 223 FIRST AIR CYLINDER
214, 224 SECOND AIR CYLINDER
215, 225 FIRST STOPPER
216, 226 SECOND STOPPER
220 SECOND DRIVE UNIT

## Claims

1. A method for manufacturing a stabilizer using a columnar member, the method comprising:
a bending step of bending the columnar member to form the columnar member into a shape of the stabilizer;
a quenching step of quenching the columnar member after the bending step; and
a tempering step of tempering the columnar member after the quenching, wherein
at least one of the quenching step and the tempering step includes a step of changing a relative positional relationship between both of end portions of the columnar member at a time of heating.

2. The method for manufacturing a stabilizer according to claim 1, wherein the step of changing the relative positional relationship between both of the end portions of the columnar member at the time of the heating is completed between a time when the columnar member is gripped before the heating is started and a time when the gripping of the columnar member is released after the heating is ended.

3. The method for manufacturing a stabilizer according to claim 1, wherein, in the step of changing the relative positional relationship between both of the end portions of the columnar member at the time of the heating, both of the end portions of the columnar member are deformed in directions of being away from each other.

4. The method for manufacturing a stabilizer according to claim 1, wherein, before changing the relative positional relationship between both the end portions of the columnar member at the time of the heating, the end portion of the columnar member gripped is rotated around a central axis of the end portion of the columnar member.
